**Europäisches Patentamt**

(19) **European Patent Office**

**Office européen des brevets**

(11) Veröffentlichungsnummer: **0 114 297**
**B1**

(12) # EUROPÄISCHE PATENTSCHRIFT

(45) Veröffentlichungstag der Patentschrift:
**10.12.86**

(51) Int. Cl.⁴: **B 23 C 5/22,** B 23 B 51/00

(21) Anmeldenummer: **83112546.3**

(22) Anmeldetag: **13.12.83**

(54) **Zerspanungswerkzeug.**

(30) Priorität: **20.12.82 DE 3247138**

(43) Veröffentlichungstag der Anmeldung:
**01.08.84 Patentblatt 84/31**

(45) Bekanntmachung des Hinweises auf die Patenterteilung:
**10.12.86 Patentblatt 86/50**

(84) Benannte Vertragsstaaten:
**AT BE CH FR GB IT LI NL SE**

(56) Entgegenhaltungen:
**EP - A - 0 008 972**
**EP - A - 0 033 086**
**EP - A - 0 065 149**
**DE - C - 3 022 104**
**FR - A - 1 280 479**
**GB - A - 2 082 102**
**US - A - 3 341 919**

(73) Patentinhaber: **Gühring, Gottlieb, Herderstrasse 50-54,**
**D-7470 Albstadt 1-Ebingen (DE)**

(72) Erfinder: **Reinauer, Josef, Weidenweg 23,**
**D-7480 Sigmaringen 3 - Laiz (DE)**

(74) Vertreter: **Grams, Klaus Dieter, Dipl.-Ing. et al,**
**Patentanwaltsbüro Tiedtke-Bühling-Kinne-**
**Grupe-Pellmann-Grams-Struif Bavariaring 4,**
**D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf ein Zerspannungswerkzeug gemäss dem Oberbegriff des Patentanspruchs 1.

Aus der EP-A-33086 ist ein Zerspannungswerkzeug vorstehend bezeichneter Art bekannt, bei dem die Wende-Schneidplatte mittels einer Schrauben-Mutterverbindung im Werkzeughalter-Schlitz positioniert und gesichert in Lage gehalten wird. Dabei wird von einer Positionierungsmutter, die einen Exenterabschnitt besitzt, eine axiale Andruckkraft erzeugt, wohingegen durch eine in die Positionierungsmutter einschraubbare Klemmschraube ein Anpressen der Klemmbackenteile an Wende-Schneidplatte erfolgt.

Mit dieser Halterung kann die Wende-Schneidplatte mit grosser Sicherheit im Halter positioniert und fixiert werden. Es hat sich jedoch herausgestellt, dass diese Art der Halterung insbesondere bei der Verwendung eines derartigen Zerspannungswerkzeugs als Kugelbahn-Fräswerkzeug auf Grenzen stösst, da von derartigen Zerspannungswerkzeugen äusserst hohe Schnittleistungen abverlangt werden.

Aus der DE-PS 3022104 ist ein Zerspannungswerkzeug bekannt, bei dem eine vier Kreisbogensegment-Schneiden aufweisende Wende-Schneidplatte Anwendung findet, die mittels einer die Klemmbacken durchsetzenden Klemmschraube in einem Aufnahmeschlitz klemmbar ist. Hierzu ist ein zusätzliches Druckteil vorgesehen, um die Wende-Schneidplatte mit zwei Schneidenflächen axial gegen Anlageflächen im Bereich des Schlitzgrundes zu drücken. Hierzu dient ein im Schlitzgrund aufgenommener T-förmiger Druckkörper, der in einer zentralen axialen Ausnehmung des Halters geführt ist. Dieser Druckkörper wird mittels eines diametral durch den Halter verlaufenden Keilstifts gegen die dem Schlitzgrund zugewandten Segmentschneiden gepresst. Auf diese Weise soll die Wende-Schneidplatte zwischen Klemmschraube und Druckkörper axial vorgespannt und dadurch positioniert werden.

Aber auch diese Befestigungsart der Wende-Schneidplatte erweist sich dann, wenn äusserst hohe Schnittleistungen erzielt werden sollen, wie dies bei einem Kugelbahn-Fräswerkzeug der Fall ist, in gewissen Punkten als nachteilig: Die Zerspannungskräfte, die auf eine Kreisbogensegment-Schneide einwirken, besitzen sowohl in axialer Richtung, als auch in Normalrichtung der Schneidplatte und darüber hinaus auch in einer Richtung, die in der Ebene der Schneidplatte liegt und auf der Halterachse senkrecht steht, sehr grosse Kraftkomponenten. Weil beim bekannten Zerspannungswerkzeug die axiale Kraftkomponente lediglich über das nur schwach dimensionierbare und relative elastische T-Stück abgefangen werden kann, kann bei grösserem Vorschub des Fräswerkzeugs der Fall auftreten, dass die Wendeplatte ihre exakte Ausrichtung bezüglich der Halterachse verliert, worunter die Arbeitsgenauigkeit des Fräswerkzeugs leidet und im Endeffekt die Standzeit der Wende-Schneidplatte verkürzt wird. Hinzu kommt, dass durch die von der Konstruktion vorbestimmte Elastizität des T-Stücks generell eine gewisse Ungenauigkeit bei der Positionierung der Wende-Schneidplatte im Halter in Kauf genommen werden muss, da sich das T-Stück bei noch nicht zusammengeklemmten Klemmbacken in gewissem Rahmen verbiegen bzw. verformen kann. Dies ist darauf zurückzuführen, dass die Kontaktflächen zwischen T-Stück und Wende-Schneidplatte auf beiden Seiten der Halterachse in unterschiedlichen Ebenen liegen und auch die Freiflächenneigung auf den beiden Seiten der Halterachse entgegengesetzt ist. Die sich durch die unsymmetrische Belastung ergebende Verformung des T-Stücks führt wiederum dazu, dass die vom Keilstift auf das T-Stück aufzubringende Kraft grösser werden muss, um die zwischen T-Stück und den zugeordneten Führungsflächen in den Klemmbacken auftretenden Kontaktkräfte überwinden zu können. Die Fixierung der Wende-Schneidplatte wird dadurch kraftraubender, zumal die von der Stellschraube des Keilstifts auf die Wende-Schneidplatte aufzubringende Fixierungskraft nur unter Zwischenschaltung vieler Führungsflächen auf die Schneidplatte übertragen werden kann. Dies ist bei der Erzeugung grosser axialer Positionierungskräfte mit erhöhtem Verschleiss der an der Kraftübertragung beteiligten Spann- und Fixiereinrichtungsteile verbunden, worunter deren Funktionszuverlässigkeit leiden kann.

Der Erfindung liegt die Aufgabe zugrunde, ein Zerspannungswerkzeug, gemäss dem Oberbegriff des Patentanspruches 1 zu schaffen, bei dem die Wende-Schneidplatte noch sicherer und einfacher im Halter befestigt werden kann, damit das Zerspannungswerkzeug in vorteilhafter Weise als Kugelbahn-Fräswerkzeug einsetzbar wird. Diese Aufgabe wird durch die im kennzeichnenden Teil des Patentanspruchs 1 angegebenen Merkmale gelöst.

Erfindungsgemäss wird die Kraft zur axialen und seitlichen Positionierung der Wende-Schneidplatte im gleichen Bereich eingeleitet, in dem die Klemmkraft aufgebracht wird, so dass der Schlitzgrund selbst als Anlage- und Stützfläche für die Wende-Schneidplatte herangezogen werden kann. Diese Anlagefläche ist äusserst starr, so dass jegliche Verformungen beim Positionierungsvorgang ausgeschlossen sind und eine exakte und statisch bestimmte Lagepositionierung der Wende-Schneidplatte erzielt werden kann, wenn die Kreisbogensegment-Schneiden gegen die Anlageflächen gepresst werden. Mit dem Druckteil in Form einer Mutter mit konischem Aussenflächenabschnitt, der mit dem Durchbruch in der Wendeplatte über die gesamte Höhe in Linienkontakt steht, lassen sich mit kleinen Bedienungskräften grosse Axialkräfte auf die Wende-Schneidplatte übertragen, ohne dass hierdurch eine Verformung des Druckteils auftritt, die sich auf die Positionierungsgenauigkeit der Wende-Schneidplatte auswirken könnte. Durch die erfindungsgemässe Anordnung der Positionierungs- und Klemmeinrichtung an einer einzigen Stelle eröffnet sich darüber hinaus die Möglichkeit, Werkzeuge zum Einziehen der Mutter bzw. Positionierungsmutter und der Klemmschraube koaxial zueinander ansetzen zu können, wodurch die Handgriffe beim Einsetzen bzw. beim Wenden der Schneidplatte erleichtert werden. Dabei ergibt sich der zusätzliche Vorteil, dass der Halter generell biegesteifer wird, weil die für das Druckteil notwendige Ausnehmung nunmehr relativ klein wird und in einen Bereich verlegt ist, an dem das vom Halter aufzunehmende Biegemoment nicht mehr so gross ist.

Die Positionierung bzw. Indexierung der Wende-Schneidplatte in Umfangsrichtung kann beispielsweise durch geeignete Formgebung des Wendeplatten-Durchbruchs erfolgen. Eine andere Lösungsmöglichkeit ergibt sich mit den Merkmalen des Patentanspruchs 2, die den besonderen Vorteil einer einfachen Fertigung der Wende-Schneidplatte bietet.

Die Weiterbildung gemäss Unteranspruch 3 führt zu besonders einfachen Handgriffen beim Wechseln bzw. Wenden der Wende-Schneidplatte, weil bei dieser Ausführung Werkzeuge von beiden Seiten an den Halter gleichzeitig angesetzt werden können.

Mit der Anpassung der Bohrung des Halters an die Geometrie der Positionierungsmutter gemäss Unteranspruch 4 bleibt die Mutter zu beiden Seiten des Schlitzes sauber geführt, so dass Biegeverformungen weitestgehend ausgeschlossen werden können und ein satter Linienkontakt zwischen Mutter und Wende-Schneidplatte auch bei grossen Axialkräften aufrechterhalten bleibt.

Wenn der Schlitz im Halter gemäss Unteranspruch 5 ausgebildet ist, bleiben die Kreisbogensegment-Schneiden der Wende-Schneidplatte stets geschont, wodurch die Zuverlässigkeit des in der Regel spröden Schneidwerkzeugs selbst bei grössten Axialkräften nicht beeinträchtigt wird.

Die Formgebung des Schlitzgrundes gemäss Unteranspruch 6 sorgt für eine möglichst schonende Kraftübertragung von der Wende-Schneidplatte zum Halter und sie hat den zusätzlichen Vorteil einer einfachen Herstellbarkeit.

Der Innensechskant in Mutter und Klemmschraube ermöglicht eine sichere Bedienung der Klemm- und Positionierungseinrichtung, wobei die Schnittleistung durch diese Formgebung nicht negativ beeinflusst wird.

Weitere vorteilhafte Ausgestaltungen sind Gegenstand der übrigen Unteransprüche.

Nachstehend werden anhand schematischer Zeichnungen mehrere Ausführungsbeispiele der Erfindung näher erläutert.

Es zeigen:

Figur 1 eine Draufsicht der Spitze des Kugelbahn-Fräswerkzeugs mit eingesetzter Wende-Schneidplatte,

Figur 2 eine Schnittansicht des in Figur 1 gezeigten Kugelbahn-Fräswerkzeugs bei einer Schnittführung entlang der Linie II–II in Figur 1,

Figur 3 die Ansicht eines Teilschnitts bei einer Schnittführung entlang der Linie III–III in Figur 1, und

Figur 4 die Ansicht eines Schnitts durch eine weitere Ausführungsform des Fräswerkzeugs bei einer Schnittführung entlang der Linie IV–IV in Figur 2.

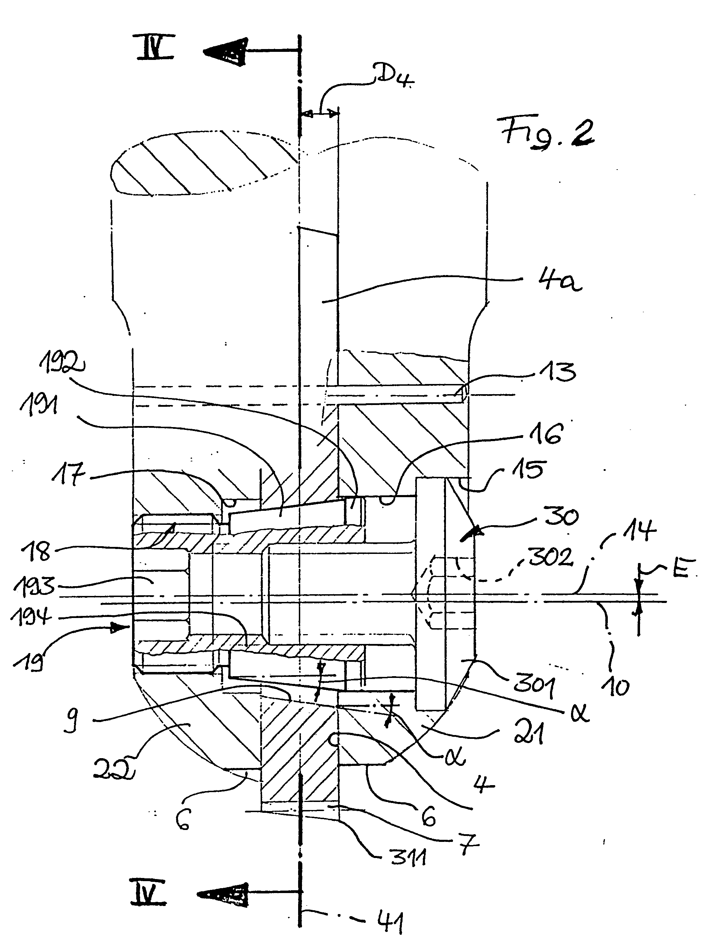

Figur 1 zeigt die Draufsicht eines Fräswerkzeugs, wie es insbesondere bei der Herstellung von Kugelbahn-Nuten beispielsweise eines homokinetischen Gelenks Anwendung findet. Derartige Fräswerkzeuge werden eingesetzt, wenn die Kugelbahn-Nuten in einem Zug, d. h. ohne Zustellbewegung gefräst werden sollen. Bei diesem Bearbeitungsvorgang wird vom Werkzeug eine extreme Schnittleistung verlangt, die die Verwendung von Hartmetall-Schneidplatten notwendig machen. Um die Standzeit des Werkzeugs zu erhöhen, setzt man Wende-Schneidplatten ein, die einmal um 180° gewendet werden können.

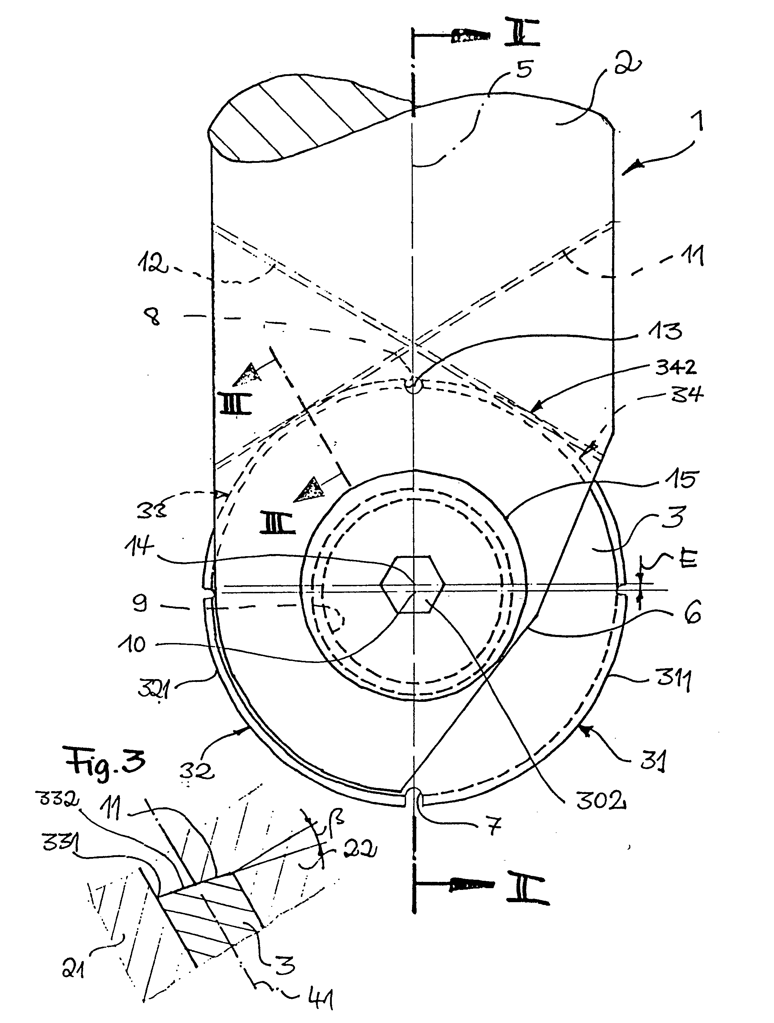

Figur 1 zeigt lediglich den vorderen Bereich des Kugelbahn-Fräswerkzeugs 1, das einen Halter bzw. Schneidplattenhalter 2, mit dem das Werkzeug in die Fräsmaschine eingespannt wird, und eine Wende-Schneidplatte 3 aufweist. Zur Herstellung der Kugelbahn-Nuten besitzt die Wende-Schneidplatte 3 vier Kreisbogensegment-Schneiden 31 bis 34, die sich jeweils über einen Winkelbereich von nahezu 90° erstrecken. Jeweils die der Spitze des Werkzeugs 1 zugewandten Segmentschneiden 31 und 32 befinden sich in Eingriff mit dem zu bearbeitenden Werkstück. Man erkennt aus der Darstellung gemäss Figur 2 und 3, dass die Wende-Schneidplatte 3 von einer planparallel bearbeiteten Platte gebildet ist, die in einem entsprechend geformten axialen Schlitz 4 im Halter 2 aufgenommen ist. Der axiale Schlitz 4 unterteilt den Halter 2 an der Spitze in zwei Klemmbakken 21 und 22, zwischen denen den Wende-Schneidplatte 3 festgeklemmt bzw. festgespannt ist. Die Wende-Schneidplatte 3 ist jedoch nicht nur zwischen den Klemmbacken 21 und 22 festgeklemmt, sondern sie ist durch eine gesonderte Fixier- und Justiereinrichtung, die nachfolgend noch näher beschrieben werden soll, in axialer Richtung derart festgelegt, dass selbst beim Einwirken sehr grosser Zerspannungskräfte keine Lageänderung der Schneidplatte 3 bezüglich des Halters 2 auftritt.

Zur Herstellung der Kugelbahn-Nut wird der Halter 2 um seine Achse 5 in Drehbewegung versetzt, wobei die Achse 5 in der Ebene der herzustellenden Kugelbahn-Nut so geneigt wird, dass sie die Achse, um die bei der Herstellung der Nut eine Relativbewegung zwischen Werkstück und Fräswerkzeug ausgeführt wird, nicht schneidet. Auf diese Weise tauchen bei einer Umdrehung des Fräswerkzeugs bzw. des Halters 2 nacheinander die Segmentschneiden 31 und 32 in das Werkstück ein und heben jeweils einen Span ab, der im wesentlichen die Länge der Segmentschneiden besitzt. Um die Spanabfuhr verbessern zu können, besitzt jeweils der Klemmbacken, der der Schneide 311 bzw. 321 benachbart ist, eine Span-Abfuhr-Abfräsung 6, wie dies auf der rechten Seite in Figur 1 gezeigt ist.

Es wurde bereits ausgeführt, dass die Wende-Schneidplatte 3, die zur Herstellung der Kugelbahn-Nut kreisrund ausgeführt ist, nicht nur zwischen den Klemmbacken 21 und 22 eingeklemmt, sondern darüber hinaus in axialer Richtung und in Umfangsrichtung positioniert werden muss. Nachfolgend soll im einzelnen die Klemmeinrichtung und die Fixier- bzw. Justiereinrichtung der Wende-Schneidplatte 3 beschrieben werden.

Die Schneidplatte 3 besitzt einen zur Mittelachse 10 konzentrischen Durchbruch 9, der von einer Kegelmantelfläche gebildet ist. Der Kegelwinkel des Durchbruchs 9 ist in Figur 2 mit dem Bezugszeichen $\alpha$ bezeichnet. Die Wende-Schneidplatte 3 stützt sich im Schlitzgrund des Schlitzes 4 symmetrisch zur Mittelachse 5 an Anlageflächen 11 bzw. 12 ab, die die jeweiligen Freiflächen 332 bzw. 342 linienförmig berühren. Aus der Darstellung gemäss Figur 3 geht dieser Linienkontakt hervor. Man kann diesen Linienkontakt im Bereich der Freiflächen auf einfache Weise dadurch sicherstellen, dass man den Schlitz 4 im Halter 2 durch zwei übereinander angeordnete Keilschlitze 4a und 4b erzeugt, von denen jeder zumindest eine Dicke $D_4$ besitzt, die der halben Stärke der Wende-Schneidplatte 3 entspricht. In Figur 2 ist der Keilschlitz 4a zu erkennen. Bei der Ausführungsform gemäss Figur 1 bis 3 berühren sich die Schlitze 4a und 5b in der Schlitz-Mittelebene 41, und der Grund des Schlitzes 4 wird den Flächen 11 und 12 gebildet, die in den gezeigten Ausführungsformen ebene Flächen darstellen. Die Anlageflächen 11 und 12 können allerdings auch von gekrümmten Flächen gebildet sein, die beispielsweise dann entstehen, wenn die Teilschlitze 4a und 4b jeweils durch einen Scheibenfräser mit grossem Radius hergestellt werden, der lediglich eine Eintauchbewegung in den Halter 2 ausführt.

Durch eine derartige Gestaltung der Anlageflächen 11 und 12 kann die Hertzsche Flächenpressung zwischen den Freiflächen der Wende-Schneidplatte und den Anlageflächen reduziert werden.

Man erkennt aus der Darstellung gemäss Figur 3, dass die Anlageflächen 11 und 12 zur Mittelebene 41 des Schlitzes und damit zu den planparallelen Flächen der Wende-Schneidplatte 3 um einen Winkel $\beta$ geneigt sind, der dem Winkel der Freiflächen 332, 342, 312 und 322 entspricht. Auf diese Weise entsteht ein Linienkontakt zwischen Wende-Schneidplatte 3 und den Anlageflächen 11 bzw. 12 des Halters 2, der sich nicht bis zu den Schneiden 331 und 341 hin erstreckt.

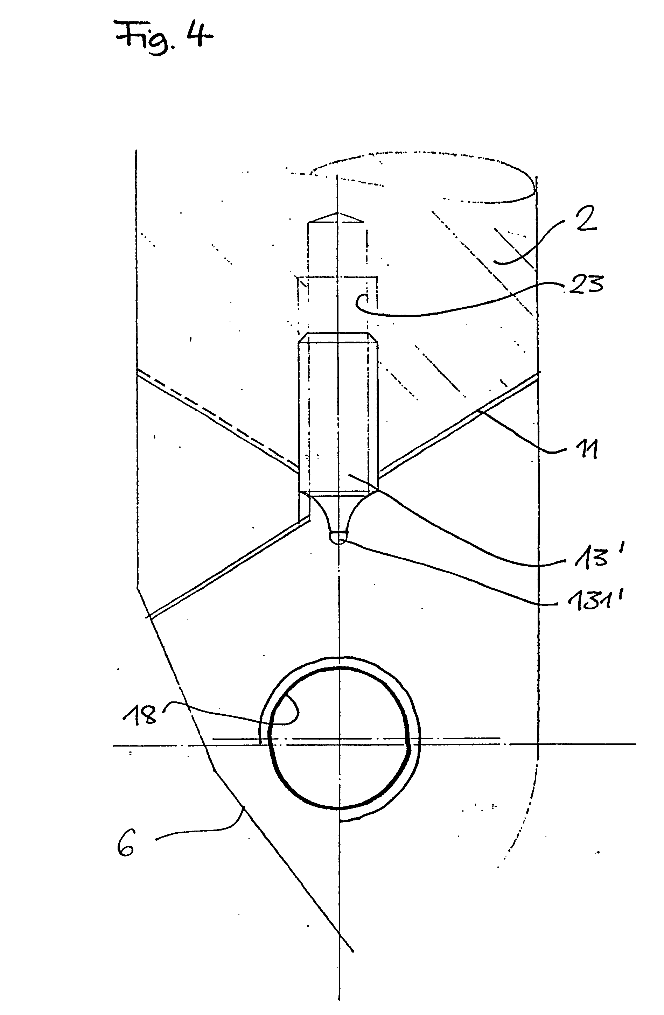

Lediglich im vordersten Bereich des Halters 2, in dem sich die beiden Teilschlitze 4a und 4b überschneiden, entsteht ein Schlitz mit einer Breite, die der Höhe der Wende-Schneidplatte 3 entspricht. Selbstverständlich können die Teilschlitze 4a und 4b auch mit einer Dicke ausgeführt werden, die die halbe Stärke der Wende-Schneidplatte 3 übersteigt. Diese Variante ist in Figur 4 dargestellt. Man erkennt, dass sich der die Anlagefläche 12 bildende obere Teilschlitz in den unteren Klemmbacken 22 hinein erstreckt (vergleiche linke Seite der Figur 4).

Zwischen den benachbarten Kreisbogensegmenten 31 und 32 bzw. 33 und 34 weist die Wende-Schneidplatte 3 jeweils eine Positionierungsnut 7 auf, die in Funktionseingriff mit einem Positionier- bzw. Fixierteil 13 im Schlitzgrund gebracht werden kann. Das Positionierteil 13 ist in der Ausführungsform gemäss Figur 1 und 2 von einem Zylinderstift gebildet, der den Halter 2 diametral an einer Stelle so durchdringt, dass der Stift 13 mit Spiel in die Positionierungsnut 7 eingreifen kann, wenn die Freiflächen der Wende-Schneidplatte 3 an den Anlageflächen 11 bzw. 12 anliegen. Der Zylinderstift 13 schneidet dabei die Mittelachse 5 des Halters 2. Man erkennt, dass durch Drehen der Wende-Schneidplatte 3 um 180° die bei der Darstellung gemäss Figur 1 dem Schlitzgrund zugewandten Segmentschneiden 33 und 34 an denselben Stellen zu liegen kommen, wie im dargestellten Zustand die Segmentschneiden 31 und 32.

Für das Anpressen der beiden Klemmbacken 21 und 22 an die Planflächen der Wende-Schneidplatte 3 besitzt das Zerspannungswerkzeug eine Schrauben-Mutter-Verbindung, die den Durchbruch 9 durchsetzt bzw. durchragt. Die Schrauben-Mutter-Verbindung besitzt eine Achse 14, die ebenfalls wie die Achse 10 des Durchbruchs 9 die Mittelachse 5 des Halters 2 schneidet. Die Lage der Achse 14 ist so auf den Verlauf der Anlageflächen 11 bzw. 12 und auf den Durchmesser der Wende-Schneidplatte 3 abgestimmt, dass die Achsen 14 und 10 im positionierten Zustand der Wende-Schneidplatte 3 um ein vorbestimmtes Exzentrizitätsmass E in axialer Richtung zueinander versetzt verlaufen. Die Achse 14 der Schrauben-Mutter-Verbindung ist dabei dem Schlitzgrund näher als die Achse 10 des Durchbruchs 9. Der Grund für diese besondere geometrische Anpassung wird im folgenden beschrieben:

Der Halter 2 besitzt zur Achse 14 eine sich durch beide Klemmbacken 21 und 22 erstreckende abgestufte Bohrung mit den Bohrungsabschnitten 15 bis 17, die im Bereich des Klemmbackens 22 in eine Gewindebohrung 18 übergeht. Die Durchmesser der Bohrungsabschnitte 15 bis 18 nehmen zum Gewindeabschnitt hin immer mehr ab. In den Gewindeabschnitt 18 ist eine Positionierungsmutter 19 geschraubt, die einen Aussenkonusabschnitt 191 und daran anschliessend einen zylindrischen Führungsabschnitt 192 besitzt, der mit Passung im Bohrungsabschnitt 16 aufgenommen ist. Am anderen Ende radial innerhalb des Aussengewindes besitzt die Positionierungsmutter 19 eine Innensechskantausnehmung 193. Die Positionierungsmutter 19 weist ferner ein Innengewinde 194 auf, das in Funktionseingriff mit einer Klemmschraube 30 gebracht werden kann. Die Klemmschraube 30 besitzt einen Schraubenkopf 301, der im Bohrungsabschnitt 15 geführt und sich an der ersten Schulter zwischen dem Bohrungsabschnitt 15 und 16 abstützt. Im Schraubenkopf 30 ist ferner eine Innensechskantausnehmung 302 ausgebildet.

Der Durchmesser des Bohrungsabschnitts 16 ist so gewählt, dass die Kegelmantelfläche des Durchbruchs 9 auf der dem Schlitzgrund zugewandten Seite geringfügig über diese Bohrungsabschnittskante vorsteht. Der Aussenkonusabschnitt 191 der Mutter 19 besitzt einen Kegelwinkel α, der dem Kegelwinkel des Durchbruchs 9 entspricht. Man erkennt aus der Darstellung gemäss Figur 2, dass der Aussenkonusabschnitt 191 mit der Kegelmantelfläche des Durchbruchs 9 über deren gesamte Länge in Linienkontakt steht und auf diese Weise eine axiale Bewegung der Wende-Schneidplatte 3 aus dem Schlitz 4 heraus verhindert. Das Zusammenspannen der Klemmbacken 21 und 22 mittels der Klemmschraube 30 erfolgt über die Positionierungsmutter 19.

Nachfolgend wird der Montagevorgang der Wende-Schneidplatte 3 im Halter 1 beschrieben.

Zunächst wird die Wende-Schneidplatte 3 in den Schlitz 4 so eingeführt, dass die Positionierungsnut 7 in Spielpassungskontakt mit dem Zylinderstift 8 gebracht wird. Die Wende-Schneidplatte 3 kann sich in diesem Zustand mit Spiel im Schlitz 4 bewegen, so dass sie von Hand leicht gegen den Schlitzgrund, d.h. gegen die Anlageflächen 11 bzw. 12 gedrückt werden kann. Zu beachten ist allerdings, dass die Wende-Schneidplatte 3 so in den Schlitz eingelegt wird, dass sich der Kegel des Durchbruchs 9 vom Gewindeabschnitt 18 weg öffnet. Wenn die Wende-Schneidplatte 3 die vorstehend beschriebene Lage einnimmt, kann die Positionierungsmutter 19 durch die Bohrungsabschnitte 15 bis 17 eingeführt und unter Zuhilfenahme eines geeigneten Imbus- oder Steckschlüssels im Zusammenwirken mit der Innensechskantausnehmung 193 in den Klemmbacken 22 geschraubt werden. Beim Einschrauben der Mutter 19 gelangt der Aussenkonusabschnitt bzw. die Aussenkonusfläche 191 allmählich in Linienkontakt mit der Kegelmantelfläche des Durchbruchs 9, so dass die Wende-Schneidplatte 3 mit zunehmender Kraft gegen die Anlageflächen 11 bzw. 12 gedrückt wird. Dabei ist besonders hervorzuheben, dass die Krafteinleitung in der Symmetrieebene der Wende-Schneidplatte 3 und auch die Abstützung an den Anlageflächen 11 und 12 symmetrisch zur Mittelachse 5 des Halters 1 erfolgt. Durch die vorstehend beschriebene besondere Gestaltung des Schlitzgrundes, d.h. durch die übereinander angeordneten Teilschlitze 4a und 4b bleiben die Schneidkanten 311, 321, 331 und 341 bei diesem Andrückvorgang vollkommen frei von Belastungen, auch wenn der Kegelwinkel α sehr klein gewählt wird, so dass ein selbsthemmender Berührungskontakt zwischen dem Aussenkonusabschnitt 191 und dem Durchbruch 9 angestrebt werden kann. Wichtig ist ferner, dass die Mutter 19 beim Einschrauben einerseits im Gewindeabschnitt 18 und andererseits im Bohrungsabschnitt 16, d.h. zu beiden Seiten des Aussenkonusabschnitts 191 geführt ist, wodurch Verformungen weitestgehend ausgeschlossen sind. Wenn die Mutter 19 ausreichend fest in den Klemmbacken 22 eingedreht ist, wird die Klemmschraube 30 in die Mutter 19 eingedreht, so dass unter Abstützung des Schraubenkopfs 301 am Klemmbacken 21 beide Klemmbacken gegen die Wende-Schneidplatte 3 gepresst werden können. Beim Anziehen der Klemmutter 30, bei dem wiederum ein Imbusschlüssel verwendet wird, kann das Werkzeug in der Innensechskantausnehmung 193 der Mutter 19 verbleiben, so dass gegebenenfalls während des Anziehens der Schraube 30 ein Nachziehen der Mutter 19 durchgeführt werden kann.

Für die Funktionsfähigkeit des vorstehend beschriebenen Fräswerkzeugs ist es von Bedeutung, dass die Tiefe des Bohrungsabschnitts 17 ausreichend gross ist, um zu verhindern, dass beim Eindrehen der Mutter 19 der Aussenkonusabschnitt 191 an der Bohrungsschulter anliegt, die zwischen dem Bohrungsabschnitt 17 und dem Gewindeabschnitt 18 liegt. In Abwandlung der in den Figuren 1 und 2 gezeigten Ausführungsform kann der Bohrungsabschnitt 17 so ausgebildet sein, dass er in ähnlicher Weise wie der Bohrungsabschnitt 16 mit einer zylindrischen Führungsfläche der Mutter zusammenarbeitet, die sich zwischen dem Aussenkonusabschnitt 191 und dem Gewindeabschnitt 18 befindet.

Figur 4 zeigt eine weitere Ausführungsform des Kugelbahn-Fräswerkzeugs. In dieser Ansicht ist lediglich ein Axialschnitt des Halters gezeigt, die Wende-Schneidplatte ist zur Vereinfachung der Darstellung weggelassen. Die Ausführungsform gemäss Figur 4 unterscheidet sich von der gemäss den Figuren 1 bis 3 einmal dadurch, dass die Teilschlitze dicker ausgeführt sind als die halbe Stärke der Wende-Schneidplatte. Ein weiterer Unterschied besteht darin, dass der Zylinderstift 13 durch ein anderes Positionierteil 13' ersetzt ist. Das Positionierteil 13' ist von einem Justierstift gebildet, der in einer axialen zentrischen Gewindebohrung 23 des Halters 2 aufgenommen ist. Der Justierstift besitzt einen konzentrischen halbkugelförmigen Nasenfortsatz 131' der mit den Positioniernuten 7 der Wende-Schneidplatte 3 in Eingriff bringbar ist. Die Ausführungsform gemäss Figur 4 hat den besonderen Vorteil, dass auf diese Weise das Spiel zwischen den Positionierungsnuten und dem Positionierteil genauer eingestellt werden kann.

Die Erfindung schafft somit ein Zerspannungswerkzeug, insbesondere ein Kugelbahn-Fräswerkzeug, das einen Halter besitzt, in dem eine Wende-Schneidplatte aufgenommen ist, die vier Kreisbogensegment-Schneiden besitzt. Die Wende-Schneidplatte ist in einem den Halter in zwei Klemmbacken unterteilenden Schlitz aufgenommen und dort mittels einer diametral verlaufenden und die Wende-Schneidplatte im Bereich des Durchbruchs durchsetzenden Klemmschraube einklemmbar. Zusätzlich zur Klemmschraube ist ein Druckteil vorgesehen, um die Schneidplatte mit zwei Schneidenflächen axial gegen Anlageflächen im Schlitzgrund zu drücken. Das Druckteil wird von einer die Schneidplatte durchragenden und in einen der Klemmbacken schraubbaren Mutter gebildet, die einen dem Schneidplatten-Durchbruch über dessen gesamte Höhe gegenüberliegenden Aussenkonusabschnitt besitzt, der beim Einschrauben unter Andrücken der Wendeplatte gegen Anlageflächen des Halters in zunehmend festen Linienkontakt mit einem dem Schlitzgrund zugewandten Innenoberflächenbereich des Durchbruchs bringbar ist. Die Klemmschraube spannt die Klemmbacken über die Mutter gegen die Wende-Schneidplatte.

**Patentanspüche**

1. Żerspannungswerkzeug mit einem Halter (2) und einer Wende-Schneidplatte (3), die in einem den Halter in zwei Klemmbacken (21, 22) unterteilenden Schlitz (4) mittels einer diametral verlaufenden und die Schneidplatte im Bereich eines Durchbruchs durchsetzenden Klemmschraube (30) klemmbar ist, wobei für das axiale Andrücken der Schneidplatte mit zwei Schneidenflächen (332, 342) gegen Anlageflächen (11, 12) im Bereich des Schlitzgrundes ein Druckteil in Form einer die Schneidplatte (3) durchragenden Positionierungs-Mutter (19) vorgesehen ist, die beim Verdrehen unter Andrücken der Schneidplatte (3) gegen die Anlageflächen (11, 12) des Halters (2) in Linienkontakt mit einem dem Schlitzgrund zugewandten Innenoberflächenbereich des Durchbruchs (9) bringbar ist, und wobei die Klemmschraube (30) die Klemmbacken (21, 22) über die Mutter (19) zusammenspannt, dadurch gekennzeichnet, dass zur Fixierung einer vier Kreisbogensegment-Schneiden (31 bis 34) aufweisenden Wende-Schneidplatte (3) die Positionierungs-Mutter (19) in eine der Klemmbacken (21, 22) schraubbar ist und einen den Durchbruch (9) über dessen gesamte Höhe gegenüberliegenden Aussenkonusabschnitt (191) besitzt, der beim Einschrauben der Positionierungs-Mutter in Linienkontakt mit der Innenoberfläche des Durchbruchs (9) bringbar ist.

2. Zerspannungswerkzeug nach Anspruch 1, mit mindestens zwei diametral gegenüberliegenden zwischen zwei Kreisbogensegment-Schneiden ausgebildeten Positionierungsnuten (7), die in Funktionseingriff mit einem entsprechend geformten Positionierungsteil (13, 13') im Schlitzgrund bringbar sind, und einem zentrischen kreisrunden Durchbruch in der Schneidplatte, die sich symmetrisch zur Halterachse in tangential verlaufenden Anlageflächen abstützt, dadurch gekennzeichnet, dass die Anlageflächen (11, 12) des Schlitzgrundes bezüglich der Achse (14) der Klemmschraube (30) so verlaufen, dass der Durchbruch (9) der Schneidplatte (3), der eine dem Aussenkonusabschnitt (191) angepasste Konizität (α) besitzt, um ein vorbestimmtes, vom Schlitzgrund weg gerichtetes Exzentrizitätsmass (E) zur Klemmschraubenachse (14) versetzt zu liegen kommt.

3. Zerspannungswerkzeug nach Anspruch 1 oder 2, dadurch gekennzeichnet, dass die Mutter (19) von der Aussenseite des Klemmbackens (22), in den sie einschraubbar ist, zugänglich ist, und auf dieser Seite eine Ausnehmung (193) zum Ansetzen eines Werkzeugs besitzt.

4. Zerspannungswerkzeug nach einem der Ansprüche 1 bis 3, wobei der Klemmbacken, an dem sich der Kopf der Klemmschraube abstützt, eine abgestufte Bohrung aufweist, dadurch gekennzeichnet, dass der der Schneidplatte (3) zugewandte Bohrungsabschnitt (16) eine Zentrierungsfläche für einen sich an den Aussenkonusabschnitt (191) anschliessenden Mutter-Endabschnitt (192) bildet.

5. Zerspannungswerkzeug nach einem der Ansprüche 2 bis 4, dadurch gekennzeichnet, dass die Anlageflächen (11, 12) jeweils ausschliesslich mit den Freiflächen (332; 342) der Schneidplatte (3) in Berührung stehen.

6. Zerspannungswerkzeug nach Anspruch 5, dadurch gekennzeichnet, dass die Anlageflächen (11, 12) in einem durch das Zentrum der Schneidplatte (3) verlaufenden Normalschnitt betrachtet mit der Schlitzebene einen Winkel (β) einschliessen, der dem Freiflächenwinkel der Kreisbogensegment-Schneiden (31 bis 34) entspricht.

7. Zerspannungswerkzeug nach einem der Ansprüche 2 bis 6, dadurch gekennzeichnet, dass das Positionierungsteil von einem Zylinderstift (13) gebildet ist, der mit einer halbkreisförmigen Nut (7) zwischen den Kreisbogensegment-Schneiden (31 und 32; 33 und 34) in Eingriff steht.

8. Zerspannungswerkzeug nach einem der Ansprüche 2 bis 6, dadurch gekennzeichnet, dass das Positionierungsteil von einem Justierstift (13') gebildet ist, der in eine axiale zentrische Gewindebohrung (23) des Halters (2) eingeschraubt ist und auf der der Schneidplatte (3) zugewandten Seite einen halbkugelförmigen Nasenfortsatz (131') besitzt.

9. Zerspannungswerkzeug nach einem der Ansprüche 1 bis 8, dadurch gekennzeichnet, dass der Kegelwinkel (α) des Aussenkonusabschnitts (191) ca. 6° beträgt.

10. Zerspannungswerkzeug nach einem der Ansprüche 3 bis 9, wobei die Klemmschraube mit einer Innensechskant-Ausnehmung versehen ist, dadurch gekennzeichnet, dass auch die Mutter (19) eine Innensechskant-Ausnehmung (193) besitzt.

11. Zerspannungswerkzeug nach einem der Ansprüche 2 bis 10, dadurch gekennzeichnet, dass das Exzentrizitätsmass (E) ca. 0.3 mm beträgt.

**Claims**

1. A cutting tool, comprising a tool holder (2) and a turnover cutting disc (3) which is adapted to be clamped in a slot (4) dividing the tool holder into two clamping jaws (21, 22) by means of a clamping screw (30) extending diametrically and passing through the cutting disc in the area of an opening, a thrust piece in the form of a positioning nut (19) extending through the cutting disc (3) being provided for pressing the cutting disc with two cutting flanks (332, 342) axially against abutment faced (11, 12) in the area of the bottom of the slot, which positioning nut is adapted to be engaged in line contact with an inner surface area of the opening (9) facing the slot bottom when it is twisted, while pressing the cutting disc (3) against the abutment faces (11, 12) of the tool holder (2), and the clamping screw (30) acting to tighten the clamping jaws (21, 22) by engagement with the nut (19), characterized in that for fixing a turnover cutting disc (3) comprising four cutting edges (31 to 34) of circular arc segment shape the positioning nut (19) is adapted to be threaded into one of the clamping jaws (21, 22) and has an outer conical portion (191) located opposite the opening (9) throughout the height thereof, which outer conical portion is adapted to be engaged in line contact with the inner surface of the opening (9) when the positioning nut is being screwed in.

2. The cutting tool as claimed in claim 1, comprising at least two diametrically opposed positioning grooves (7) which are formed between two cutting edges of circular arc segment shape and are adapted to be engaged functionally by a positioning member (13, 13') of complementary shape in the bottom of the slot, and a central, circular opening in the cutting disc which is supported symmetrically with respect to the axis of the tool holder at tangentially extending abutment faces, characterized in that the abutment faces (11, 12) of the slot bottom extend in such manner with respect to the axis (14) of the clamping screw (30) that the opening (9) in the cutting disc (3), which opening has a taper ratio (α) adapted to that of the outer conical portion (191), comes to lie offset from the axis (14) of the clamping screw by a predetermined measure of eccentricity (E) oriented away from the slot bottom.

3. The cutting tool as claimed in claim 1 or 2, characterized in that the nut (19) is accessible from the outside of the clamping jaw (22) into which it is adapted to be threaded and has a recess (193) at this side for tool engagement.

4. The cutting tool as claimed in one of the claims 1 to 3, wherein the clamping jaw which supports the head of the clamping screw has a stepped bore, characterized in that the bore section (16) facing the cutting disc (3) constitutes a centering surface for a nut end portion (192) adjacent the outer conical portion (191) of the nut.

5. The cutting tool as claimed in one of the claims 2 to 4, characterized in that the abutment faces (11, 12) each are in contact exclusively with the free flanks (332; 342) of the cutting disc (3).

6. The cutting tool as claimed in claim 5, characterized in that the abutment faces (11, 12), as seen in a normal section through the center (10) of the cutting disc (3), include an angle (β) with the plane of the slot which angle corresponds to the free flank angle of the cutting edges (31 to 34) of circular arc segment shape.

7. The cutting tool as claimed in one of claims 2 to 6, characterized in that the positioning member is embodied by a cylindrical pin (13) engaging in a semicircular groove (7) formed between the cutting edges (31 and 32; 33 and 34) of circular arc segment shape.

8. The cutting tool as claimed in one of claims 2 to 6, characterized in that the positioning member is embodied by an adjustment pin (13') which is threaded into an axial central threaded bore (23) in the tool holder (2) and which has a hemispherical nose projection (131') at the end facing the cutting disc (3).

9. The cutting tool as claimed in one of the claims 1 to 8, characterized in that cone angle (α) of the outer conical portion (191) is approximately 6°.

10. The cutting tool as claimed in one of claims 3 to 9, wherein, the clamping screw has an internal hexagonal recess, characterized in that also the nut (19) has an internal hexagonal recess (193).

11. The cutting tool as claimed in one of claims 2 to 10, characterized in that the measure of eccentricity (E) is approximately 0.3 mm.

## Revendications

1. Outil d'usinage à enlèvement de copeaux comportant un support (2) et une plaque de coupe reversible (3) qui peut être bloquée dans une fente (4) subdivisant le support en deux mâchoires de serrage (21, 22), au moyen d'une vis de blocage (30) dirigée diamétralement et traversant la plaque de coupe dans la zone d'un perçage, une pièce d'appui en forme d'écrou de positionnement (19) traversant la plaque de coupe (3) étant prévue pour l'appui axial de la plaquette de coupe laquelle comporte deux surfaces de coupe (332, 342) contre des surfaces d'appui (11, 12) dans la zone du fond de la fente, lequel écrou, lors de la torsion par la pression de la plaque de coupe (3) contre les surfaces d'appui (11, 12) du support (2), peut être amené, en contact linéaire avec une zone de la surface intérieure du perçage (9) située du côté du fond de la fente, et la vis de blocage (30) serrant ensemble les mâchoires de serrage (21, 22) par l'intermédiaire de l'écrou (19), caractérisé en ce que, pour serrer une plaquette reversible (3) comportant quatre tranchants (31 à 34) en forme d'arc de cercle, l'écrou de positionnement (19) peut être vissé dans l'une des mâchoires de serrage (21, 22) et comporte une partie conique extérieure (191), faisant face au perçage (9) sur toute sa hauteur, qui peut être amenée, lors du vissage de l'écrou de positionnement, en contact linéaire avec la surface intérieure du perçage (9).

2. Outil selon la revendication 1, comportant au moins deux rainures de positionnement (7) diamétralement opposées formées entre deux tranchants en forme de d'arc de cercle, qui peuvent être accouplées fonctionnellement avec un élément de positionnement (13, 13') de forme correspondante dans le fond de la fente, et un perçage circulaire central dans la plaque de coupe, laquelle s'appuie symétriquement par rapport à l'axe du support sur des surfaces d'appui dirigées tangentiellement caractérisé en ce que les surfaces d'appui (11, 12) du fond de la fente sont dirigées, par rapport à l'axe (14) de la vis de blocage (30), de façon que le perçage (9) de la plaque reversible (3), qui présente une conicité (α) adaptée à la section conique extérieure (191), vienne se placer avec un décalage par rapport à l'axe (14) de la vis de blocage correspondant à une excentricité (E) prédéterminée, de direction opposée au fond de la fente.

3. Outil selon la revendication 1 ou 2, caractérisé en ce que l'écrou (19) est accessible par la face extérieure de la mâchoire de serrage (22) dans laquelle il peut être vissé, et comporte, sur cette face, un creux (193) pour placer un outil.

4. Outil selon l'une des revendications 1 à 3, dans lequel la mâchoire de serrage sur laquelle s'appuie la tête de la vis de blocage comporte un alésage étagé, caractérisé en ce que la section (16) de l'alésage située du côté de la plaque reversible (3) constitue une surface de centrage pour une section terminale d'écrou (192) se raccordant à la section conique extérieure (191).

5. Outil selon l'une des revendications 2 à 4, caractérisé en ce que les surfaces d'appui (11, 12) sont chacune en contact exclusivement avec les surfaces de coupe (332; 342) de la plaque de coupe (3).

6. Outil selon la revendication 5, caractérisé en ce que les surfaces d'appui (11, 12) font avec le plan de la fente, dans une direction suivant une section normale passant par le centre de la plaquette de coupe (3), un angle (β) qui correspond à l'angle des faces de dépouille des tranchants en forme d'arc de cercle (31 à 34).

7. Outil selon l'une des revendications 2 à 6, caractérisé, en ce que l'élément de positionnement est constitué par une cheville cylindrique (13) accouplée avec une rainure semi-circulaire (7) entre les tranchants en forme d'arc de cercle (31 et 32; 33 et 34).

8. Outil selon l'une des revendications 2 à 6, caractérisé en ce que l'élément de positionnement est constitué par une cheville de réglage (13') qui est vissée dans un alésage taraudé central (23) du support (2) et comporte, du côté de la plaquette amovible (3), un appendice hémisphérique (131').

9. Outil selon l'une des revendications 1 à 8, caractérisé en ce que l'angle de cône (α) de la section conique extérieure (191) est d'environ 6°.

10. Outil selon l'une des revendications 3 à 9, la vis de blocage est à six sans creux, caractérisé en ce que l'écrou (19) comporte un évidement hexagonal (193).

11. Outil selon l'une des revendications 2 à 10, caractérisé en ce que l'excentricité (E) est d'environ 0,3mm.

Fig. 2

0114297

Fig. 2

Fig. 3

Fig. 4